(19) Europäisches Patentamt
European Patent Office
Office européen des brevets

(11) **EP 4 354 027 B1**

(12) **FASCICULE DE BREVET EUROPEEN**

(45) Date de publication et mention
de la délivrance du brevet:
**14.05.2025 Bulletin 2025/20**

(21) Numéro de dépôt: **23201305.2**

(22) Date de dépôt: **02.10.2023**

(51) Classification Internationale des Brevets (IPC):
*F24D 13/04* (2006.01)    *F24D 19/10* (2006.01)
*F24H 3/04* (2022.01)     *F24H 3/12* (2022.01)
*F24H 15/277* (2022.01)   *F24H 15/31* (2022.01)
*F24H 15/37* (2022.01)    *F24H 15/421* (2022.01)
*G01D 4/00* (2006.01)     *H04Q 9/00* (2006.01)

(52) Classification Coopérative des Brevets (CPC):
**F24D 19/1018; F24D 13/04; F24H 3/0411;
F24H 3/12; F24H 15/277; F24H 15/31; F24H 15/37;
F24H 15/421;** F24D 2220/2036

(54) **COMMUTATION AUTOMATIQUE D'UN RADIATEUR MIXTE**

AUTOMATISCHE UMSCHALTUNG EINES MISCHRADIATORS

AUTOMATIC SWITCHING OF A MIXED RADIATOR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **14.10.2022 FR 2210636**

(43) Date de publication de la demande:
**17.04.2024 Bulletin 2024/16**

(73) Titulaire: **Sagemcom Energy & Telecom SAS
92270 Bois-Colombes (FR)**

(72) Inventeur: **TEBOULLE, Henri
92500 RUEIL MALMAISON (FR)**

(74) Mandataire: **Cabinet Boettcher et al
5, rue de Vienne
75008 Paris (FR)**

(56) Documents cités:
**EP-A1- 0 617 238    EP-A1- 3 067 638
EP-A1- 3 421 941    WO-A1-84/02765**

**Description**

L'invention concerne le domaine des compteurs intelligents et des passerelles de communication connectées localement à de tels compteurs.

ARRIERE PLAN DE L'INVENTION

Les compteurs dits « intelligents », ou « communicants » (*smart meters*) remplacent aujourd'hui progressivement les compteurs traditionnels des distributeurs d'électricité, d'eau et de gaz.

Chacun de ces compteurs a bien sûr pour fonction primaire de mesurer une quantité d'énergie électrique, d'eau ou de gaz fournie par un réseau de distribution à l'installation d'un utilisateur final (abonné). Ces compteurs sont aussi capables de réaliser un certain nombre de fonctions complémentaires : gestion des tarifs par réception d'ordres, relève et programmation à distance, télé-information client, etc.

On envisage d'optimiser encore la gestion de ces compteurs en installant chez l'utilisateur une passerelle de communication (appelée généralement *Multi-Utility Gateway*), connectée à tous les compteurs de l'installation. Une telle passerelle serait par exemple reliée aux compteurs via le protocole *Wireless M-Bus,* et aux Systèmes d'Information (SI) des distributeurs ou des gestionnaires de réseau (DSO, pour *Distribution System Operators*) via un protocole de type NB-IoT, LTE-M, 2G, 3G, 4G, 5G, CPL, etc.

Dans cette architecture, c'est la passerelle qui relève les compteurs et transmet les mesures aux SIs, et c'est aussi la passerelle qui réalise les opérations de *edge computing* (que l'on traduit parfois par « informatique en périphérie »), c'est-à-dire le traitement et l'analyse en local des mesures et autres données produites par les compteurs.

Dans ce contexte, on cherche de nouvelles méthodes, innovantes et efficaces, pour réduire la facture globale de l'utilisateur.

Le document EP 0617238 divulgue un procédé de gestion d'un radiateur mixte comportant un système de chauffage électrique et un système de chauffage à eau, le système de chauffage comprenant un dispositif d'activation permettant de l'activer, et le système de chauffage à eau comprenant une vanne agencée pour couper sélectivement une circulation d'eau dans le radiateur mixte.

OBJET DE L'INVENTION

L'invention a pour objet de réduire la facture énergétique globale d'un utilisateur.

RESUME DE L'INVENTION

En vue de la réalisation de ce but, on propose à la revendication 1 un procédé de gestion d'au moins un radiateur mixte qui comporte un système de chauffage électrique et un système de chauffage à eau, le système de chauffage électrique comprenant un dispositif d'activation permettant de l'activer, et le système de chauffage à eau comprenant une vanne agencée pour couper sélectivement une circulation d'eau dans le radiateur mixte,

le procédé de gestion étant mis en œuvre par une unité de traitement comprenant une mémoire dans laquelle est stockée une table prédéfinie,
le procédé de gestion comprenant les étapes répétées chaque jour courant, pour chaque période courante d'un ensemble prédéterminé d'au moins une période successive définies dans le jour courant, de :

- acquérir dans la table prédéfinie une indication prédéterminée associée à ladite période courante, ladite indication prédéterminée appartenant à une liste comprenant une première indication selon laquelle seul le système de chauffage électrique doit être activé, et/ou une deuxième indication selon laquelle seul le système de chauffage à eau doit être activé, et/ou une troisième indication selon laquelle le système de chauffage électrique et le système de chauffage à eau doivent tous deux être activés ;
- piloter le dispositif d'activation et/ou la vanne en fonction de l'indication prédéterminée.

L'unité de traitement, qui est par exemple (mais pas obligatoirement) intégrée dans une passerelle de communication, pilote donc chaque jour courant les systèmes de chauffage du ou des radiateurs mixtes en fonction des indications prédéterminées associées aux périodes successives. Les indications prédéterminées peuvent être définies en fonction des tarifs de l'électricité et/ou de l'énergie utilisée pour chauffer l'eau (du gaz par exemple), ce qui permet d'optimiser la facture énergétique globale de l'utilisateur.

On propose de plus un procédé de gestion tel que précédemment décrit, dans lequel l'unité de traitement maintient la vanne ouverte en permanence, et dans lequel la liste comprend uniquement la deuxième indication et la troisième indication.

On propose de plus un procédé de gestion tel que précédemment décrit, dans lequel l'indication prédéterminée associée à ladite période courante dépend de ladite période courante et/ou dudit jour courant et/ou d'une période de l'année à laquelle appartient ledit jour courant.

On propose de plus un procédé de gestion tel que précédemment décrit, dans lequel les indications prédéterminées dépendent de tarifs de l'électricité et/ou de tarifs d'une énergie permettant de chauffer l'eau.

On propose de plus un procédé de gestion tel que précédemment décrit, dans lequel la table prédéfinie peut être modifiée à distance par un distributeur d'électricité et/ou par un distributeur d'une énergie permettant de chauffer l'eau.

On propose de plus un procédé de gestion tel que précédemment décrit, dans lequel, pour modifier la table prédéfinie, le distributeur d'électricité et/ou le distributeur de l'énergie permettant de chauffer l'eau transmettent à l'unité de traitement les indications prédéterminées associées aux périodes successives.

On propose de plus un procédé de gestion tel que précédemment décrit, dans lequel, pour modifier la table prédéfinie, le distributeur d'électricité et/ou le distributeur de l'énergie permettant de chauffer l'eau transmettent à l'unité de traitement les tarifs de l'électricité et/ou les tarifs de l'énergie permettant de chauffer l'eau.

On propose de plus un procédé de gestion tel que précédemment décrit, dans lequel, pour modifier la table prédéfinie, le distributeur d'électricité et/ou le distributeur de l'énergie permettant de chauffer l'eau transmettent à l'unité de traitement des données d'entrée permettant à l'unité de traitement de déterminer les tarifs de l'électricité et/ou les tarifs de l'énergie permettant de chauffer l'eau.

On propose de plus un procédé de gestion tel que précédemment décrit, dans lequel la table prédéfinie peut être modifiée localement par un utilisateur du ou des radiateurs mixtes.

On propose de plus un équipement selon la revendication 10:

On propose de plus un équipement tel que précédemment décrit, comprenant en outre un deuxième module de communication agencé de sorte que la table prédéfinie peut être modifiée à distance via ledit deuxième module de communication par un distributeur d'électricité et/ou par un distributeur d'une énergie permettant de chauffer l'eau.

On propose de plus un équipement tel que précédemment décrit, comprenant en outre un troisième module de communication agencé de sorte que la table prédéfinie peut être modifiée localement via ledit troisième module de communication par un utilisateur du ou des radiateurs mixtes.

On propose de plus un équipement tel que précédemment décrit, l'équipement étant une passerelle de communication reliée localement à un compteur d'électricité et/ou à un compteur de gaz.

On propose de plus un équipement tel que précédemment décrit, l'équipement étant un radiateur mixte.

On propose de plus un programme d'ordinateur comprenant des instructions qui conduisent l'unité de traitement de l'équipement tel que précédemment décrit à exécuter les étapes du procédé de gestion tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

## BREVE DESCRIPTION DES DESSINS

Il sera fait référence aux dessins annexés parmi lesquels :

[Fig. 1] la figure 1 représente des radiateurs mixtes, un compteur électrique, un compteur de gaz et une passerelle de communication ;
[Fig. 2] la figure 2 représente des étapes d'un procédé de gestion.

## DESCRIPTION DETAILLEE DE L'INVENTION

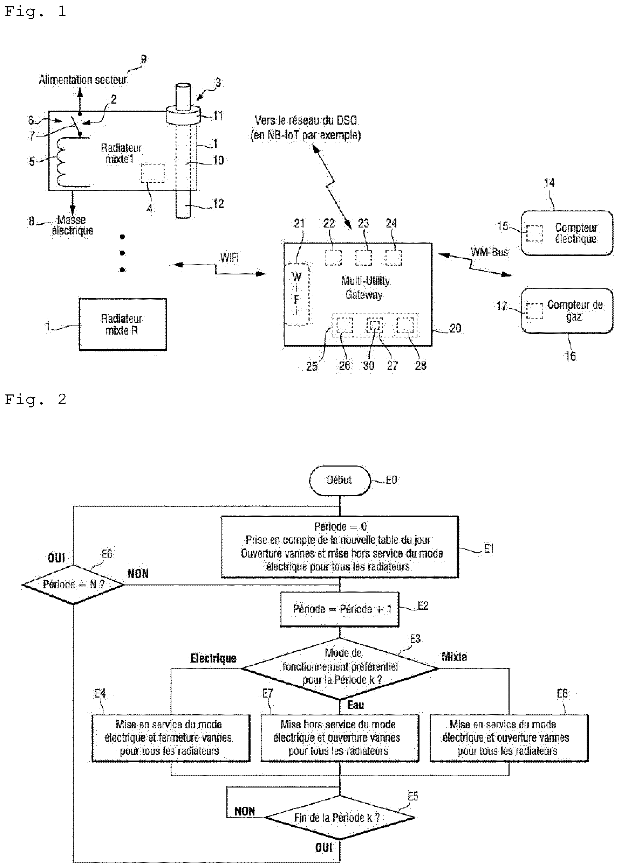

En référence à la figure 1, au moins un, en l'occurrence plusieurs radiateurs mixtes 1 sont installés dans l'habitation d'un utilisateur.

Chaque radiateur mixte 1 comporte un système de chauffage électrique 2, un système de chauffage à eau 3 et un module de communication 4.

Le système de chauffage électrique 2 comprend une résistance chauffante 5 et un système d'activation 6. Le système d'activation 6 permet d'activer le système de chauffage électrique 2, et comprend ici un interrupteur 7 monté en série avec la résistance chauffante 5.

La résistance chauffante 5 comprend une première borne reliée à une masse électrique 8 (située à l'extérieur du radiateur 1) et une deuxième borne reliée à une première borne de l'interrupteur 7. La deuxième borne de l'interrupteur 7 est reliée à une alimentation secteur 9 (située à l'extérieur du radiateur 1).

Le module de communication 4 est ici un module Wi-Fi. Le module de communication 4 permet de commander l'interrupteur 7 à distance pour activer ou désactiver le système de chauffage électrique 2. Lorsque l'interrupteur 7 est fermé, un courant électrique circule dans la résistance chauffante 5 et le système de chauffage électrique 2 produit de la chaleur. Lorsque l'interrupteur 7 est ouvert, aucun courant électrique ne circule dans la résistance chauffante 5 et le système de chauffage électrique 2 ne produit pas de chaleur.

Le système de chauffage à eau 3 comprend un conduit interne 10 et une vanne 11.

Le conduit interne 10 chemine dans le radiateur mixte 1 et est connecté au circuit d'eau 12 de l'habitation. La vanne 11 permet de couper sélectivement une circulation d'eau dans le conduit interne 10 et donc dans le radiateur mixte 1.

Le module de communication 4 permet aussi de commander la vanne 11 à distance. Lorsque la vanne 11 est ouverte, de l'eau chaude circule dans le conduit interne 10 et le système de chauffage à eau 3 produit de la chaleur. Lorsque la vanne 11 est fermée, l'eau chaude ne circule pas dans le conduit interne 10 et le système de chauffage à eau 3 ne produit pas de chaleur.

L'eau chaude est chauffée par une chaudière à gaz ; le gaz est donc l'énergie utilisée ici pour chauffer l'eau.

On note que les composants des radiateurs mixtes 1, qui nécessitent une alimentation électrique (module de communication 4, vanne 11, etc.), sont alimentés préférentiellement par le secteur.

La consommation électrique de l'habitation de l'utilisateur est mesurée par un compteur électrique 14. Le compteur électrique 14 comprend un module de communication 15 permettant d'établir une communication via le protocole *Wireless M-Bus.*

La consommation de gaz de l'habitation de l'utilisateur est mesurée par un compteur de gaz 16. Le compteur de gaz 16 comprend aussi un module de communication 17 permettant d'établir une communication via le protocole *Wireless M-Bus.*

Le compteur électrique 14 et le compteur de gaz 16 peuvent être installés à l'intérieur ou à l'extérieur de l'habitation.

Une passerelle de communication 20 *(Multi-Utility Gateway),* dédiée à l'habitation, est installée à l'intérieur ou à l'extérieur de l'habitation. La passerelle 20 est reliée localement au compteur électrique 14 et au compteur de gaz 16.

La passerelle 20 comprend un premier module de communication 21, un deuxième module de communication 22, un troisième module de communication 23 et un quatrième module de communication 24.

Le premier module de communication 21 est un module Wi-Fi.

Pour chaque radiateur mixte 1, la passerelle 20 peut ainsi piloter à distance le système de chauffage électrique 2 et le système de chauffage à eau 3 dudit radiateur mixte 1 via le premier module de communication 21 et le module de communication 4 dudit radiateur mixte 1.

Le deuxième module de communication 22 permet d'établir une communication via le protocole NB-IoT. La passerelle 20 peut ainsi communiquer avec les distributeurs d'électricité et de gaz. Ici, par « distributeur » (d'électricité ou de gaz), on entend soit le fournisseur (d'électricité ou de gaz), soit le gestionnaire du réseau de distribution (d'électricité ou de gaz).

Le troisième module de communication 23 permet à l'utilisateur de communiquer avec la passerelle 20. Le troisième module de communication 23 peut comprendre des moyens radioélectriques sans fil (NFC, Wi-Fi, Bluetooth, etc.), voire même des moyens filaires. Il peut aussi s'agir d'une interface utilisant par exemple un ou des boutons et un écran positionné sur la passerelle 20.

Le quatrième module de communication 24 permet d'établir une communication via le protocole *Wireless M-Bus.* La passerelle 20 peut ainsi communiquer avec le compteur électrique 14, via le quatrième module de communication 24 et le module de communication 15, et avec le compteur de gaz 16, via le quatrième module de communication 24 et le module de communication 17.

La passerelle 20 intègre aussi une unité de traitement 25. L'unité de traitement 25 comprend au moins un composant de traitement 26 (électronique et/ou logiciel), qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). L'unité de traitement 25 comprend aussi une ou des mémoires 27, reliées à ou intégrées dans le composant de traitement 26. Au moins l'une de ces mémoires 27 forme un support d'enregistrement lisible par ordinateur, sur lequel est enregistré au moins un programme d'ordinateur comprenant des instructions qui conduisent le composant de traitement 26 à exécuter au moins certaines des étapes du procédé de gestion qui sera décrit plus bas.

L'unité de traitement 25 comprend aussi une horloge 28 de type RTC (pour *Real Time Clock,* que l'on peut traduire par « horloge temps réel »).

On décrit maintenant le procédé de gestion des radiateurs mixtes 1 de l'habitation, qui est ici mis en œuvre par l'unité de traitement 25 de la passerelle 20.

Le procédé de gestion a pour but de réduire la facture globale de gaz et d'électricité de l'utilisateur, en commutant la consommation des radiateurs mixtes 1 de gaz en électrique, et d'électrique en gaz, à certaines périodes pertinentes.

Le procédé de gestion est ici mis en œuvre à l'initiative de l'utilisateur. Cela n'est pas obligatoire, et le procédé de gestion pourrait être mis en œuvre à l'initiative de l'un ou des distributeurs de gaz et d'électricité, ou bien automatiquement.

Lorsque les radiateurs 1 sont allumés et que le procédé est activé, chaque jour courant est divisé en un ensemble prédéterminé d'au moins une période successive Pk, k variant de 1 à N.

Chaque période Pk a pour durée Hk et on a donc, pour chaque jour courant :

$$\sum_{k=1}^{N} Hk = 24\ heures$$

Les durées Hk de ces périodes Pk ne sont pas toutes nécessairement identiques.

Le contrôle des radiateurs mixtes 1, et donc de la commutation de gaz et d'électricité des radiateurs mixtes 1, est réalisé période par période (et non pas quotidiennement, sauf si le jour courant comporte une seule période).

Le procédé de gestion consiste, chaque jour courant, pour chaque période courante, à acquérir dans une table prédéfinie 30 une indication prédéterminée associée à ladite période courante, et à piloter le dispositif d'activation 6 du système de chauffage électrique 2 et/ou la vanne 11 du système de chauffage à eau 3 en fonction de l'indication prédéterminée.

L'indication prédéterminée appartient à une liste comprenant une première indication selon laquelle seul le système de chauffage électrique 2 doit être activé, et/ou une deuxième indication selon laquelle seul le système de chauffage à eau 3 doit être activé, et/ou une troisième indication selon laquelle le système de chauffage électrique 2 et le système de chauffage à eau 3 doivent tous deux être activés.

La table prédéfinie 30 est stockée dans une mémoire 27 de l'unité de traitement 25.

L'indication prédéterminée, associée à chaque période courante, peut dépendre de ladite période courante et/ou dudit jour courant et/ou d'une période de l'année à laquelle appartient ledit jour courant.

Les indications prédéterminées dépendent ici des tarifs de l'électricité et des tarifs du gaz appliqués pour les périodes successives, et qui eux-mêmes dépendent donc, chaque jour courant, desdites périodes successives dudit jour courant et/ou dudit jour courant et/ou d'une période de l'année à laquelle appartient ledit jour courant.

On optimise ainsi la consommation équivalente en kWh, en commutant automatiquement soit sur Eau, soit sur Electricité, le mode de fonctionnement des radiateurs mixtes 1 en fonction des tarifs appliqués période par période quotidienne (N périodes tarifaires dans une journée).

La table prédéfinie 30 peut être modifiée à distance par le distributeur d'électricité et/ou par le distributeur de gaz. Le ou les distributeurs communiquent avec la passerelle 20 via le deuxième module de communication 22. Ceci permet de prendre en compte au fil de l'eau des changements tarifaires.

Dans un mode de réalisation, pour modifier la table prédéfinie 30, le distributeur d'électricité et/ou le distributeur de gaz transmettent directement à l'unité de traitement 25 de la passerelle 20, via le deuxième module de communication 22, les indications prédéterminées associées aux périodes successives. L'unité de traitement 25 reçoit donc ainsi directement les informations constituant la table prédéfinie 30.

Dans un autre mode de réalisation, pour modifier la table prédéfinie 30, le distributeur d'électricité et/ou le distributeur de gaz transmettent à l'unité de traitement 25, via le deuxième module de communication 22, les tarifs de l'électricité et/ou les tarifs du gaz. Ces tarifs varient possiblement, comme on l'a vu, en fonction des jours et des périodes. L'unité de traitement 25 produit à partir de ces tarifs, pour chaque jour courant, les indications prédéterminées associées aux périodes successives dudit jour courant.

Dans un autre mode de réalisation, pour modifier la table prédéfinie 30, le distributeur d'électricité et/ou le distributeur de gaz transmettent à l'unité de traitement 25, via le deuxième module de communication 22, des données d'entrée permettant à l'unité de traitement 25 de déterminer les tarifs de l'électricité et/ou les tarifs du gaz. L'unité de traitement 25 détermine alors les tarifs à partir des données d'entrée, et produit à partir de ces tarifs, pour chaque jour courant, les indications prédéterminées associées aux périodes successives dudit jour courant.

Les tarifs peuvent donc dépendre des types de journées (semaine, week-end, jours fériés, vacances), et la table prédéfinie 30 est donc susceptible d'être remise à jour régulièrement, tous les jours par exemple, par le ou les distributeurs (ou par l'unité de traitement 25 à partir des données transmises par le ou les distributeurs).

L'horloge 28, qui est remise à l'heure régulièrement par l'un ou les distributeurs (via le deuxième module de communication 22), permet de gérer le calendrier tarifaire associé à la table prédéfinie 30.

La table prédéfinie 30 peut aussi être modifiée localement par l'utilisateur. L'utilisateur communique avec la passerelle 20 via le troisième module de communication 23 de celle-ci.

Un exemple de table prédéfinie est fourni ci-dessous :

| Période | Indications prédéterminées | Tarif préférentiel |
|---------|----------------------------|--------------------|
| 1 | Deuxième indication | Gaz |
| 2 | Première indication | Electricité |
| ... | Première indication | Electricité |
| k | Première indication | Electricité |
| ... | Deuxième indication | Gaz |
| N-1 | Deuxième indication | Gaz |
| N | Première indication | Electricité |

Les indications prédéterminées comprennent ici la première indication et la deuxième indication.

On voit que les indications prédéterminées associées aux périodes successives dépendent bien des tarifs de l'électricité et du gaz.

Pour les périodes 2 à k (incluses) et la période N, le tarif préférentiel est le tarif de l'électricité, et l'indication prédéterminée associée à chacune de ces périodes est la première indication : seul le système de chauffage électrique 2 doit être activé.

Pour les autres périodes, le tarif préférentiel est le tarif du gaz, et l'indication prédéterminée associée à chacune de ces périodes est la deuxième indication : seul le système de chauffage à eau 3 doit être activé.

En référence à la figure 2, on décrit un mode de réalisation du procédé de gestion.

Le procédé débute à l'étape E0.

Puis, la variable « Période » est initialisée à 0.

L'unité de traitement 25 prend en compte une nouvelle table prédéfinie 30, qui a été remise à jour. Dans ce mode de réalisation, la table prédéfinie 30 est remise à jour chaque jour par l'unité de traitement 25 à partir des informations transmises par les distributeurs d'électricité et de gaz.

L'unité de traitement 25 ouvre la vanne 11 et désactive le système de chauffage électrique 2 de chaque radiateur mixte 1 (étape E1).

L'unité de traitement 25 incrémente la variable Période :

$$\text{Période = Période + 1 (étape E2).}$$

L'unité de traitement 25 vérifie l'indication prédéterminée associée à la période courante (étape E3).

Si l'indication prédéterminée est la première indication, l'unité de traitement 25 active le système de chauffage électrique 2 de chaque radiateur mixte 1, et ferme la vanne 11 de chaque radiateur mixte 1 (étape E4).

L'unité de traitement 25 vérifie alors si le temps présent correspond à la fin de la période courante (étape E5).

Si ce n'est pas le cas, le procédé reboucle sur l'étape E5.

Si c'est le cas, l'unité de traitement 25 vérifie si la période courante est la dernière du jour courant, c'est-à-dire si :

$$\text{Période = N (étape E6).}$$

Si c'est le cas, le procédé passe à l'étape E1. Si ce n'est pas le cas, le procédé passe à l'étape E2.

A l'étape E3, si l'indication prédéterminée est la deuxième indication, l'unité de traitement 25 désactive le système de chauffage électrique 2 de chaque radiateur mixte 1, et ouvre la vanne 11 de chaque radiateur mixte 1 (étape E7). Le procédé passe alors à l'étape E5.

A l'étape E3, si l'indication prédéterminée est la troisième indication, l'unité de traitement 25 active le système de chauffage électrique 3 de chaque radiateur mixte 1, et ouvre la vanne 11 de chaque radiateur mixte 1 (étape E8). Le procédé passe alors à l'étape E5.

Alternativement, il serait possible de prévoir, pour chaque radiateur mixte 1, que l'unité de traitement 25 maintienne ouverte en permanence la vanne 11 du système de chauffage à eau 3 dudit radiateur mixte 1. Dans ce cas, le système de chauffage à eau 3 est toujours actif (en tout cas lorsque le procédé de gestion est activé), et la liste d'indications prédéterminées comprend uniquement la deuxième indication (selon laquelle seul le système de chauffage à eau 3 doit être activé) et la troisième indication (selon laquelle le système de chauffage électrique 2 et le système de chauffage à eau 3 doivent tous deux être activés). L'unité de traitement 25 commande donc uniquement l'ouverture et la fermeture de l'interrupteur 11 des radiateurs mixtes 1. L'étape E4 sur la figure 2 est supprimée.

On note qu'il est très avantageux de mettre en œuvre le procédé de gestion dans la passerelle de communication. En effet, une telle passerelle est prévue pour communiquer avec les distributeurs et donc pour acquérir des informations tarifaires, mais aussi pour communiquer en local avec des équipements de l'habitation, de sorte que la mise en œuvre de l'invention dans la passerelle ne nécessite pas d'intégrer dans celle-ci de nouveaux moyens de communication.

Bien entendu, l'invention n'est pas limitée aux modes de réalisation décrits mais englobe toute variante entrant dans le champ de l'invention tel que défini par les revendications.

La passerelle pourrait communiquer avec les radiateurs, les compteurs et les distributeurs avec des moyens de communication différents de ceux décrits ici. On a déjà évoqué différents moyens pouvant être utilisés pour communiquer avec les distributeurs. La communication avec les radiateurs pourrait par exemple utiliser les protocoles Zigbee ou KNX. La communication avec le compteur électrique pourrait par exemple utiliser les protocoles CPL, M-Bus ou série HDLC.

La passerelle de communication (*Multi-Utility Gateway*) pourrait être intégrée dans le compteur électrique.

L'équipement intégrant l'unité de traitement, dans laquelle est mis en œuvre le procédé de gestion, n'est pas nécessairement une passerelle de communication (*Multi-Utility Gateway*), mais pourrait être un autre équipement, et par exemple l'un des radiateurs mixtes. L'invention peut aussi être mise en œuvre dans l'un des compteurs ou dans un concentrateur de données relié à des compteurs d'une pluralité d'habitations ou à une pluralité de passerelles. L'invention peut aussi être mise en œuvre à distance, chez un distributeur, qui commanderait donc à distance les radiateurs mixtes, ou bien être gérée dans le *cloud.*

L'habitation de l'utilisateur, dans laquelle est mise en œuvre l'invention, ne comprend pas forcément uniquement des radiateurs mixtes, mas pourrait aussi comprendre, en plus d'au moins un radiateur mixte, un ou des radiateurs (uniquement) à eau, et/ou un ou des radiateurs (uniquement) électriques.

L'eau chaude, qui circule dans les conduits internes des systèmes de chauffage à eau des radiateurs mixtes, pourrait être chauffée non pas par une chaudière à gaz mais par un moyen de chauffage différent, utilisant une énergie différente : fioul, bois (bûches, pellets), etc. Dans ce cas, les indications prédéterminées peuvent dépendre uniquement des tarifs de l'électricité, ou bien éventuellement, des tarifs de l'énergie utilisée pour chauffer l'eau. Le distributeur de l'énergie permettant de chauffer l'eau peut éventuellement alors modifier aussi la table prédéfinie.

La liste d'indications prédéterminées ne contient pas nécessairement la première indication, la deuxième indication et la troisième indication, mais pourrait contenir seulement certaine(s) de ces indications, voire d'autre(s), par exemple une indication selon laquelle les deux systèmes de chauffage doivent être désactivés à certaines périodes de la journée (pendant la nuit par exemple) lorsque les tarifs sont trop élevés. On peut prévoir qu'une telle indication peut être sélectionnée par l'utilisateur uniquement (et pas par les distributeurs).

**Revendications**

1. Procédé de gestion d'au moins un radiateur mixte (1) qui comporte un système de chauffage électrique (2) et un système de chauffage à eau (3), le système de chauffage électrique comprenant un dispositif d'activation (6) permettant de l'activer, et le système de chauffage à eau comprenant une vanne (11) agencée pour couper sélectivement une circulation d'eau dans le radiateur mixte,

   le procédé de gestion étant mis en œuvre par une unité de traitement (25) comprenant une mémoire (27) dans laquelle est stockée une table prédéfinie (30),
   le procédé de gestion comprenant les étapes répétées chaque jour courant, pour chaque période courante d'un ensemble prédéterminé d'au moins une période successive définies dans le jour courant, de :

   - acquérir dans la table prédéfinie (30) une indication prédéterminée associée à ladite période courante, ladite indication prédéterminée appartenant à une liste comprenant une première indication selon laquelle seul le système de chauffage électrique (2) doit être activé, et/ou une deuxième indication selon laquelle seul le système de chauffage à eau (3) doit être activé, et/ou une troisième indication selon laquelle le système de chauffage électrique et le système de chauffage à eau doivent tous deux être activés ;
   - piloter le dispositif d'activation (6) et/ou la vanne (11) en fonction de l'indication prédéterminée.

2. Procédé de gestion selon la revendication 1, dans lequel l'unité de traitement (25) maintient la vanne (11) ouverte en permanence, et dans lequel la liste comprend uniquement la deuxième indication et la troisième indication.

3. Procédé de gestion selon l'une des revendications précédentes, dans lequel l'indication prédéterminée associée à ladite période courante dépend de ladite période courante et/ou dudit jour courant et/ou d'une période de l'année à laquelle appartient ledit jour courant.

**4.** Procédé de gestion selon la revendication 3, dans lequel les indications prédéterminées dépendent de tarifs de l'électricité et/ou de tarifs d'une énergie permettant de chauffer l'eau.

**5.** Procédé de gestion selon l'une des revendications précédentes, dans lequel la table prédéfinie (30) peut être modifiée à distance par un distributeur d'électricité et/ou par un distributeur d'une énergie permettant de chauffer l'eau.

**6.** Procédé de gestion selon les revendications 4 et 5, dans lequel, pour modifier la table prédéfinie (30), le distributeur d'électricité et/ou le distributeur de l'énergie permettant de chauffer l'eau transmettent à l'unité de traitement (25) les indications prédéterminées associées aux périodes successives.

**7.** Procédé de gestion selon les revendications 4 et 5, dans lequel, pour modifier la table prédéfinie (30), le distributeur d'électricité et/ou le distributeur de l'énergie permettant de chauffer l'eau transmettent à l'unité de traitement (25) les tarifs de l'électricité et/ou les tarifs de l'énergie permettant de chauffer l'eau.

**8.** Procédé de gestion selon les revendications 4 et 5, dans lequel, pour modifier la table prédéfinie (30), le distributeur d'électricité et/ou le distributeur de l'énergie permettant de chauffer l'eau transmettent à l'unité de traitement (25) des données d'entrée permettant à l'unité de traitement de déterminer les tarifs de l'électricité et/ou les tarifs de l'énergie permettant de chauffer l'eau.

**9.** Procédé de gestion selon l'une des revendications précédentes, dans lequel la table prédéfinie (30) peut être modifiée localement par un utilisateur du ou des radiateurs mixtes (1).

**10.** Equipement comprenant :

    - un premier module de communication (21) agencé pour communiquer avec au moins un radiateur mixte (1) comportant un système de chauffage électrique (2) et un système de chauffage à eau (3), le système de chauffage électrique (2) comprenant un dispositif d'activation (6) permettant de l'activer, et le système de chauffage à eau comprenant une vanne (11) agencée pour couper sélectivement une circulation d'eau dans le radiateur mixte (1);
    - une unité de traitement (25) comprenant une mémoire (27) dans laquelle est stockée une table prédéfinie (30), l'unité de traitement (25) étant agencée pour mettre en œuvre le procédé de gestion selon l'une des revendications précédentes, le pilotage du dispositif d'activation (6) et/ou de la vanne (11) étant réalisé via le premier module de communication (21).

**11.** Equipement selon la revendication 10, comprenant en outre un deuxième module de communication (22) agencé de sorte que la table prédéfinie (30) peut être modifiée à distance via ledit deuxième module de communication par un distributeur d'électricité et/ou par un distributeur d'une énergie permettant de chauffer l'eau.

**12.** Equipement selon l'une des revendications 10 ou 11, comprenant en outre un troisième module de communication (23) agencé de sorte que la table prédéfinie (30) peut être modifiée localement via ledit troisième module de communication par un utilisateur du ou des radiateurs mixtes (1).

**13.** Equipement selon l'une des revendications 10 à 12, l'équipement étant une passerelle de communication (20) reliée localement à un compteur d'électricité et/ou à un compteur de gaz.

**14.** Equipement selon l'une des revendications 10 à 13, l'équipement étant un radiateur mixte.

**15.** Programme d'ordinateur comprenant des instructions qui conduisent l'unité de traitement (25) de l'équipement selon l'une des revendications 10 à 14 à exécuter les étapes du procédé de gestion selon l'une des revendications 1 à 9.

**16.** Support d'enregistrement lisible par ordinateur, sur lequel est enregistré le programme d'ordinateur selon la revendication 15.

**Patentansprüche**

**1.** Betriebsverfahren zum Betreiben zumindest eines Mischheizkörpers (1), der ein Elektroheizsystem (2) und ein Wasserheizsystem (3) enthält, wobei das Elektroheizsystem eine Aktivierungsvorrichtung (6) für seine Aktivierung umfasst, und das Wasserheizsystem ein Ventil (11) umfasst, das dafür ausgelegt ist, einen Wasserumlauf in dem Mischheizkörper selektiv zu unterbrechen,

wobei das Betriebsverfahren von einer Verarbeitungseinheit (25) mit einem Speicher (27), auf welchem eine vorgegebene Tabelle (30) gespeichert ist, ausgeführt wird,

wobei das Betriebsverfahren die folgenden, an jedem laufenden Tag während jedes laufenden Zeitraums aus einer vorbestimmten Gesamtheit bestehend aus besagtem Zeitraum und aus zumindest einem an dem laufenden Tag definierten Folgezeitraum wiederholten Schritte umfasst, dass:

- in der vorgegebenen Tabelle (30) eine dem laufenden Zeitraum zugeordnete vorbestimmte Angabe (30) erfasst wird, wobei die vorbestimmte Angabe zu einer Liste gehört, welche umfasst: eine erste Angabe, wonach nur das Elektroheizsystem (2) aktiviert sein soll, und/oder eine zweite Angabe, wonach nur das Wasserheizsystem (3) aktiviert sein soll, und/oder eine dritte Angabe, wonach das Elektroheizsystem und das Wasserheizsystem gleichermaßen aktiviert sein sollen;
- die Aktivierungsvorrichtung (6) und/oder das Ventil (11) basierend auf der vorbestimmten Angabe angesteuert werden.

2. Betriebsverfahren nach Anspruch 1, wobei die Verarbeitungseinheit (25) das Ventil (11) dauerhaft offen hält, und wobei die Liste nur die zweite Angabe und die dritte Angabe umfasst.

3. Betriebsverfahren nach einem der vorhergehenden Ansprüche, wobei die dem laufenden Zeitraum zugeordnete vorbestimmte Angabe von dem laufenden Zeitraum und/oder von dem laufenden Tag und/oder von einem Jahreszeitraum, zu welchem der laufende Tag gehört, abhängig ist.

4. Betriebsverfahren nach Anspruch 3, wobei die vorbestimmten Angaben von Strompreisen und/oder von Preisen für eine Energie zur Wassererwärmung abhängig sind.

5. Betriebsverfahren nach einem der vorhergehenden Ansprüche, wobei die vorgegebene Tabelle (30) von einem Stromversorger und/oder einem Versorger einer Energie zur Wassererwärmung aus der Ferne verändert werden kann.

6. Betriebsverfahren nach den Ansprüchen 4 und 5, wobei zur Veränderung der vorgegebenen Tabelle (30) der Stromversorger und/oder der Versorger der Energie zur Wassererwärmung die den aufeinanderfolgenden Zeiträumen zugeordneten, vorbestimmten Angaben an die Verarbeitungseinheit (25) übermitteln.

7. Betriebsverfahren nach den Ansprüchen 4 und 5, wobei zur Veränderung der vorgegebenen Tabelle (30) der Stromversorger und/oder der Versorger der Energie zur Wassererwärmung die Strompreise und/oder die Preise für die Energie zur Wassererwärmung an die Verarbeitungseinheit (25) übermitteln.

8. Betriebsverfahren nach den Ansprüchen 4 und 5, wobei zur Veränderung der vorgegebenen Tabelle (30) der Stromversorger und/oder der Versorger der Energie zur Wassererwärmung Eingabedaten, die von der Verarbeitungseinheit zur Festlegung der Strompreise und/oder der Preise für die Energie zur Wassererwärmung benötigt werden, an die Verarbeitungseinheit (25) übermitteln.

9. Betriebsverfahren nach einem der vorhergehenden Ansprüche, wobei die vorgegebene Tabelle (30) von einem Benutzer des oder der Mischheizkörper (1) vor Ort verändert werden kann.

10. Ausrüstung umfassend:

- ein erstes Kommunikationsmodul (21), das dafür ausgelegt ist, mit zumindest einem Mischheizkörper (1), der ein Elektroheizsystem (2) und ein Wasserheizsystem (3) enthält, zu kommunizieren, wobei das Elektroheizsystem (2) eine Aktivierungsvorrichtung (6) für seine Aktivierung umfasst und das Wasserheizsystem ein Ventil (11) umfasst, das dafür ausgelegt ist, einen Wasserumlauf in dem Mischheizkörper (1) selektiv zu unterbrechen;
- eine Verarbeitungseinheit (25) mit einem Speicher (27), in welchem eine vorgegebene Tabelle (30) gespeichert ist, wobei die Verarbeitungseinheit (25) dafür ausgelegt ist, das Betriebsverfahren nach einem der vorhergehenden Ansprüche auszuführen, wobei die Ansteuerung der Aktivierungsvorrichtung (6) und/oder des Ventils (11) über das erste Kommunikationsmodul (21) erfolgt.

11. Ausrüstung nach Anspruch 10, ferner umfassend ein zweites Kommunikationsmodul (22), das derart ausgelegt ist, dass die vorgegebene Tabelle (30) von einem Stromversorger und/oder einem Versorger einer Energie zur Wassererwärmung über das zweites Kommunikationsmodul aus der Ferne verändert werden kann.

12. Ausrüstung nach einem der Ansprüche 10 oder 11, ferner umfassend ein drittes Kommunikationsmodul (23), das derart ausgelegt ist, dass die vorgegebene Tabelle (30) von einem Benutzer des oder der Mischheizkörper (1) über das dritte Kommunikationsmodul vor Ort verändert werden kann.

13. Ausrüstung nach einem der Ansprüche 10 bis 12, wobei es sich bei der Ausrüstung um ein Kommunikations-Gateway (20) handelt, das vor Ort mit einem Stromzähler und/oder einem Gaszähler verbunden ist.

14. Ausrüstung nach einem der Ansprüche 10 bis 13, wobei es sich bei der Ausrüstung um einen Mischheizkörper handelt.

15. Computerprogramm, das Befehle umfasst, welche die Verarbeitungseinheit (25) der Ausrüstung nach einem der Ansprüche 10 bis 14 dazu veranlassen, die Schritte des Betriebsverfahrens nach einem der Ansprüche 1 bis 9 auszuführen.

16. Computerlesbares Speichermedium, auf welchem das Computerprogramm nach Anspruch 15 abgespeichert ist.

**Claims**

1. A management method for managing at least one combi radiator (1) that comprises both an electrical radiator system (2) and a hot-water radiator system (3), the electrical radiator system including an activation device (6) enabling it to be activated and the hot-water radiator system including a valve (11) arranged to act selectively to cut off a flow of water through the combi radiator;

   the management method being performed by a processor unit (25) including a memory (27) storing a predefined table (30);
   the management method comprising the following steps that are repeated for each current day, and for each current period taken from a predetermined period set constituted by at least one successive period defined in the current day, the steps comprising:

   · acquiring a predetermined indication from the predefined table (30), said predetermined indication being associated with said current period and being taken from a list comprising a first indication for which only the electrical radiator system (2) is to be activated, and/or a second indication for which only the hot-water radiator system (3) is to be activated, and/or a third indication for which both the electrical radiator system and the hot-water radiator system are to be activated;
   · controlling the activation device (6) and/or the valve (11) as a function of the predetermined indication.

2. A management method according to claim 1, wherein the processor unit (25) keeps the valve (11) open permanently, and wherein the list comprises only the second and third indications.

3. A management method according to either preceding claim, wherein the predetermined indication associated with said current period depends on said current period and/or on said current day and/or on the time of year applicable to said current day.

4. A management method according to claim 3, wherein the predetermined indications depend on electricity tariffs and/or on tariffs for energy used for heating the hot water.

5. A management method according to any preceding claim, wherein the predefined table (30) can be modified remotely by an electricity DSO and/or by a DSO of energy for heating the hot water.

6. A management method according to claims 4 and 5, wherein, in order to modify the predefined table (30), the predetermined indications associated with the successive periods are transmitted to the processor unit (25) by the electricity DSO and/or by the DSO of the energy for heating the hot water.

7. A management method according to claims 4 and 5, wherein, in order to modify the predefined table (30), the electricity tariffs and/or the tariffs of the energy for heating the hot water are transmitted to the processor unit (25) by the electricity DSO and/or by the DSO of the energy for heating the hot water.

8. A management method according to claims 4 and 5, wherein, in order to modify the predefined table (30), input data enabling the processor unit (25) to determine the electricity tariffs and/or the tariffs of the energy for heating the hot water are transmitted to the processor unit by the electricity DSO and/or by the DSO of the energy for heating the hot water.

9. A management method according to any preceding claim, wherein the predefined table (30) can be modified locally by a user of the combi radiator(s) (1).

10. Equipment comprising:

· a first communication module (21) arranged to communicate with at least one combi radiator (1) that comprises both an electrical radiator system (2) and a hot-water radiator system (3), the electrical radiator system including an activation device (6) enabling it to be activated and the hot-water radiator system including a valve (11) arranged to act selectively to cut off a flow of water through the combi radiator;
· a processor unit (25) including a memory (27) storing a predefined table (30), the processor unit being arranged to perform the management method according to any preceding claim, the activation device (6) and/or the valve (11) being controlled via the first communication module (21).

11. Equipment according to claim 10, further comprising a second communication module (22) arranged in such a manner that the predefined table (30) can be modified remotely via said second communication module by an electricity DSO and/or by a DSO of energy for heating the hot water.

12. Equipment according to claim 10 or claim 11, further comprising a third communication module (23) arranged in such a manner that the predefined table (30) can be modified locally via said third communication module by a user of the combi radiator(s) (1).

13. Equipment according to any one of claims 10 to 12, the equipment being a multi-utility gateway (20) that is locally connected to an electricity meter and/or to a gas meter.

14. Equipment according to any one of claims 10 to 13, the equipment being a combi radiator.

15. A computer program including instructions that cause the processor unit (25) of the equipment according to any one of claims 10 to 14 to execute the steps of the management method according to any one of claims 1 to 9.

16. A computer-readable storage medium storing the computer program according to claim 15.

Fig. 1

Fig. 2

# EP 4 354 027 B1

## RÉFÉRENCES CITÉES DANS LA DESCRIPTION

**Documents brevets cités dans la description**

- EP 0617238 A